# EUROPEAN PATENT APPLICATION

(11) **EP 4 300 990 A1**
(43) Date of publication of application: **03.01.2024**
(21) Application number: 23152579.1
(22) Date of filing: 20.01.2023
(51) Int. Cl.: H04R 1/02, G02C 11/06, H04R 5/033, H04R 1/10

(54) **AUDIO GLASSES AND AUDIO DEVICE**

(30) Priority: 01.07.2022 TW 111207006 U; 07.09.2022 TW 111209750 U; 09.11.2022 TW 111212280 U
(71) Applicant: Cotron Corporation, Taipei City 111 (TW)
(72) Inventor: YANG, Bill, 111 Taipei City (TW)
(74) Representative: Becker, Eberhard

(57) **Abstract**

A pair of audio glasses (100) and an audio device (200) are provided. The pair of audio glasses (100) includes a glasses body (110). The glasses body (110) has a wireless transmission device (112), a first connector (110A) and an audio processor (116). The audio processor (116) is electrically connected to the wireless transmission device (112) and the first connector (110A). The audio device (200) includes a main body (210, 310). The main body (210,310) is configured to be assembled to a glasses (50) and has a wireless transmission device (112), a first connector (110A) and an audio processor (116). The audio processor (116) is electrically connected to the wireless transmission device (112) and the first connector (110A).

## Description

### BACKGROUND

### Field of the Disclosure

The present disclosure relates to a pair of glasses and a device, and in particular, to a pair of audio glasses and an audio device.

### Description of Related Art

With the continuous advancement of technology, personal electronic products are all developing towards the trend of being light and miniaturized. Smart phones, tablet computers or notebook computers, etc., have become indispensable to people's daily life. Further, smart glasses are gradually becoming popular. For the purpose of communication and audio-visual enjoyment, smart glasses are also equipped with the function of sound playback. However, to allow users to listen to the sound information provided by the smart glasses without disturbing others, earphones are a better solution. Earphones provide the listener with better sound transmission, allowing the user to hear and understand the sound content clearly, unlike airborne sound that is not easy to be heard clearly. Especially when the user is moving, such as indoors or outdoor sports, driving, vigorous activities or noisy environments, the sound transmission will not be affected.

Taiwan Patent No. I589950 discloses that a ground element in the glasses-type communication device may be conducted to the system ground plane in the earphone or the hearing aid through an extension element. In this way, the influence caused by the surrounding environment on the antenna element may be reduced, thereby helping to improve the stability of the antenna element. However, in order to ensure the normal performance of the main function of the glasses-type communication device, that is, the normal performance of the communication function, the earphone or the hearing aid cannot be disconnected from the glasses-type communication device.

Taiwan Patent No. 201415113 discloses that an eyewear system may include a removable speaker. The speaker may be plugged into a hearing port to receive audio signals from an adapter. However, the speaker only provide general functions.

Taiwan Patent No. 201102693 discloses that the multimedia supply unit of multifunctional glasses further includes a connection hole for connecting an earphone or a speaker, and outputs multimedia data through the earphone or the speaker. However, the earphone or speaker also provide only general functions.

Chinese Patent No. CN211656358U discloses that a module cable with the function of Bluetooth audio reception has an earphone connector adapted to the earphone. The earphone connector 11 is provided with a variety of connection models, and the connection of different earphones is performed through the interfaces of the various models. However, the function of the speaker has not been improved.

Taiwan Patent No. M620164 discloses that a Bluetooth earphone may be easily combined with the bracket of an object by using a connecting unit, and the Bluetooth earphone is provided with a sounding hole on the front side of an earhook part of the main body of the earphone. When worn in combination with glasses and other objects, the sounding hole may be rightly located on the back of the user's ear, so that the sound vibration waves broadcasted by the sounding hole may be avoided without causing direct harm to the user's eardrum. However, it is still difficult to avoid disturbance caused by ambient noise to users.

Taiwan Patent No. M296987 discloses an improvement in the structure of glasses with a wireless transceiver system, so that the wireless transceiver system is directly attached to the temples of the glasses, which not only makes it easy for users to use, but also does not cause burden to the ears. However, the earphones cannot be detached from the temples.

Taiwan Patent No. M296986 discloses multi-functional glasses with Bluetooth wireless earphones. Since the first temple and the second temple are clamped in the double-tooth hinge of the frame through a slot hinge, the first temple and the second temple may be easily mounted on the rim or easily disassembled from the rim, which facilitates ease of use. However, the earphones cannot be detached from the temples.

### SUMMARY OF THE DISCLOSURE

The present disclosure provides a pair of audio glasses and an audio device, which may solve the problem of poor broadcasting effect.

A pair of audio glasses provided in the disclosure includes a glasses body. The glasses body has a wireless transmission device, a first connector, and an audio processor. The audio processor is electrically connected to the wireless transmission device and the first connector.

In an embodiment of the disclosure, the glasses body further has a speaker unit electrically connected to the audio processor.

In an embodiment of the present disclosure, the pair of audio glasses further includes a switching unit. The audio processor is switched to be electrically connected to the speaker unit or the first connector through the switching unit.

In an embodiment of the pair of audio glasses of the present disclosure, the switching unit is combined in the first connector.

In an embodiment of the pair of audio glasses of the present disclosure, the speaker unit is a diaphragm speaker or a bone conduction driver.

In an embodiment of the pair of audio glasses of the present disclosure, the wireless transmission device is a Bluetooth wireless transmission device.

In an embodiment of the pair of audio glasses of the present disclosure, the pair of audio glasses further includes an earphone with a second connector, and the first connector serves to connect to the second connector.

In an embodiment of the pair of audio glasses of the present disclosure, the earphone includes an earphone body and an audio cable. The audio cable has a second connector and a third connector, the earphone body has a fourth connector, and the third connector is configured to connect to the fourth connector.

In an embodiment of the pair of audio glasses of the present disclosure, the audio processor has at least one of a binaural beats generating circuit, a hearing aid circuit, and a regional broadcast receiving circuit.

An audio device of the present disclosure includes a main body. The main body is configured to be arranged on the glasses, and has a wireless transmission device, a first connector, and an audio processor. The audio processor is electrically connected to the wireless transmission device and the first connector.

In an embodiment of the audio device of the present disclosure, the main body further has a speaker unit electrically connected to the audio processor.

In an embodiment of the audio device of the present disclosure, the audio device further includes a switching unit. The audio processor is switched to be electrically connected to the speaker unit or the first connector through the switching unit.

In an embodiment of the audio device of the present disclosure, the switching unit is combined in the first connector.

In an embodiment of the audio device of the present disclosure, the speaker unit is a diaphragm speaker or a bone conduction driver.

In an embodiment of the audio device of the present disclosure, the wireless transmission device is a Bluetooth wireless transmission device.

In an embodiment of the audio device of the present disclosure, the audio device further includes an earphone with a second connector, and the first connector serves to connect to the second connector.

In an embodiment of the audio device of the present disclosure, the audio processor has at least one of a binaural beats generating circuit, a hearing aid circuit, and a regional broadcast receiving circuit.

Based on the above, in the pair of audio glasses and the audio device in the present disclosure, the glasses body has an audio process, or the audio device is detachably matched with the glasses, which may provide a better broadcast effect and facilitate ease of use.

### BRIEF DESCRIPTION OF THE DRAWINGS

FIG. 1 is a schematic diagram of a pair of audio glasses according to an embodiment of the present disclosure.
FIG. 2 is a schematic diagram of an audio device according to an embodiment of the present disclosure.
FIG. 3 is a schematic diagram of an audio device according to another embodiment of the present disclosure.

### DESCRIPTION OF EMBODIMENTS

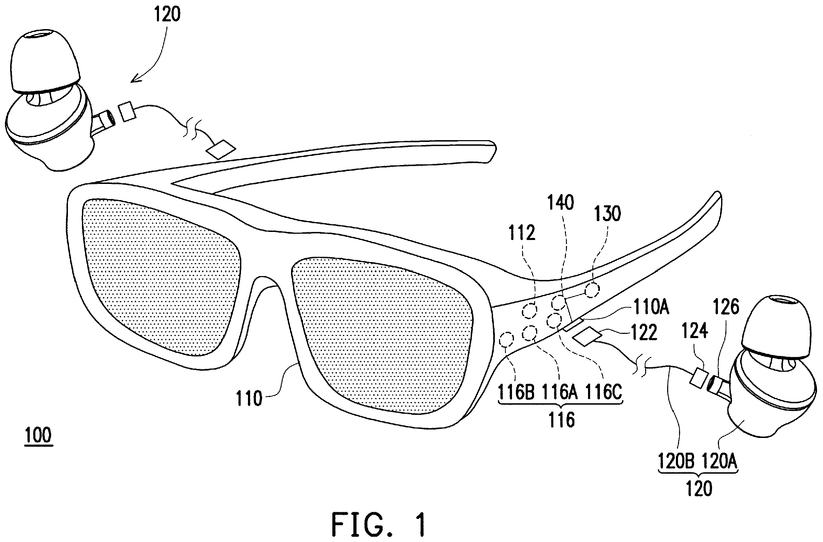

FIG. 1 is a schematic diagram of a pair of audio glasses according to an embodiment of the present disclosure. Referring to FIG. 1, the pair of audio glasses 100 in this embodiment includes a glasses body 110. The glasses body 110 has a wireless transmission device 112, a first connector 110A, and an audio processor 116. The audio processor 116 is electrically connected to the wireless transmission device 112 and the first connector 110A. Since a glasses body 110 has the wireless transmission device 112, it is possible to acquire external audio signals wirelessly, and transmit the audio signals to the first connector 110A after being processed by the audio processor 116. In this way, as long as the user wears the glasses body 110, the user is able to listen to various audio sources through an earphone 120 connected to the first connector 110A or the speaker unit 130 electrically connected to the audio processor 116.

The earphone 120 has a second connector 122. The first connector 110A is configured to connect to the second connector 122. In an embodiment, the first connector 110A and the second connector 122 may be connectors in the form of MMCX, and the shape of which belongs to a type of coaxial connector, as long as the male connector is inserted into the female connector and then engaged. In addition, after the connection is completed, the MMCX connector will limit the movement of the male connector and the female connector in the axial direction, but retain the freedom of rotation of the male connector and the female connector rotating along the axial direction as the rotation axis, and they may rotate with 360° of freedom of rotation.

In the pair of audio glasses 100 of the present embodiment, the earphones 120 may provide the listener with better sound transmission, so that the user may clearly hear and understand the sound content without being affected even when the user is moving. When the MMCX connector is adopted, because the second connector 122 may be rotated by 360° relative to the first connector 110A, it is more convenient to arrange the wires, and the wires are not easily entangled.

In an embodiment of the present disclosure, the glasses body 110 may further have a display processor (not shown). The wireless transmission device 112 enables the glasses body 110 to perform wireless data transmission with other devices, such as communication, transmission of audio and video data, etc., but the present disclosure is not limited thereto. The wireless transmission device 112 may be a Bluetooth wireless transmission device.

The audio processor 116 is electrically connected to the first connector 110A. Therefore, the audio signal processed by the audio processor 116 may be transmitted to the earphone 120 through the first connector 110A and the second connector 122, and the earphone 120 may be driven to produce sound. In this embodiment, the audio processor 116 has at least one of a binaural beats generating circuit 116A, a hearing aid circuit 116B, and a regional broadcast receiving circuit 116C.

When the audio processor 116 is provided with a binaural beats generating circuit 116A, the binaural beats generating circuit 116A is configured to generate an audio source having binaural beats. When the audio source with binaural beats is received by both ears of the user, the brain may receive a new frequency whose magnitude is a difference between the audio frequencies heard by both ears. For example, if the left ear listens to a sound with a frequency of 420Hz and the right ear listens to a sound with a frequency of 410Hz, the brain will receive a frequency of 10Hz. When the binaural beats generated by the binaural beats generating circuit 116A are different, different effects will be produced on the user. Binaural beats are specific sound stimuli, a state-of-consciousness-altering technique that may be used to aid in meditation, relaxation, enhance creativity, facilitate focus, improve sleep quality, or other effects. After the audio with binaural beats is input to the user from the earphone body 120A, the user's brain wave frequency will be induced to this frequency band. For example, 8Hz-13Hz audio with binaural beats may generate brainwaves that put the user in a relaxed state, 14Hz-30Hz audio with binaural beats may generate brainwaves that put the user in a state of focus, 4Hz-7Hz audio with binaural beats may generate brainwaves that put the user in a light sleep state, and 0.5Hz-3.5Hz audio with binaural beats may generate brainwaves that put the user in a deep sleep state. For users with insomnia, the audio with binaural beats may effectively improve sleep quality. Therefore, the user of the glasses 100 may set the binaural beats generating circuit 116A according to requirements, which adds value to the glasses 100.

When the audio processor 116 is provided with the hearing aid circuit 116B, the sound received by the microphone (not shown) of the glasses body 110 may be appropriately processed by the hearing aid circuit 116B, and the audio signal processed by the hearing aid circuit 116B is then transmitted to the earphone 120 through the first connector 110A and the second connector 122, thereby driving the earphone 120 to produce sound. Therefore, the earphone 120 may be used by the hearing-impaired user as an aid to clearly hear people's voice surrounding the user and other sounds.

When the audio processor 116 has the regional broadcast receiving circuit 116C, the nearby broadcast audio may be received through the regional broadcast receiving circuit 116C. For example, multiple users in close proximity may collectively receive music from a single broadcast source as long as their use mode is set to broadcast mode. Or, during a meeting, the host may broadcast the voice to the devices of a large number of attendees. The regional broadcast receiving circuit 116C may adopt a low energy audio (LE Audio) transmission specification, for example, based on Bluetooth communication technology.

The glasses body 110 may or may not have a built-in speaker unit 130 for sound playback. Therefore, even if the earphone 120 is not used, various audio sources may be played directly through the speaker unit 130. The speaker unit 130 may be a diaphragm speaker that transmits sound waves through the air, a bone conduction driver that transmits vibration waves through the human body, or other types of speakers. The bone conduction driver transmits the audio signals directly to the auditory nerve through the human body in the form of vibration, while the diaphragm speaker vibrates the air so as for the user's diaphragm to receive the vibration and then the vibration is transmitted to the auditory nerve.

In addition, the pair of audio glasses 100 may further include a switching unit 140. If the glasses body 110 has a built-in speaker unit 130, the audio processor 116 is switched to be electrically connected the speaker unit 130 or the first connector 110A through the switching unit 140. That is, when the earphone 120 is not connected to the first connector 110A, the audio processor 116 is electrically connected to the speaker unit 130 so that the speaker unit 130 plays various audio sources. When the earphone 120 is connected to the first connector 110A, the switching unit 140 automatically switches the audio processor 116 to be electrically connected to the first connector 110A, so that the earphone 120 can play various audio sources. For example, from a physical point of view, the switching unit 140 may be a mechanical switching unit combined in the first connector 110A. When the second connector 122 of the earphone 120 is inserted into the first connector 11 0A, the second connector 122 will push a part of the switching unit 140 inside the first connector 110A to disconnect the circuit between the audio processor 116 and the speaker unit 130, so that the circuit between the audio processor 116 and the first connector 110A is turned on. In other words, the switching unit 140 and the first connector 110A may be integrated into a single module.

Because the pair of audio glasses 100 in this embodiment includes the detachable glasses body 110 and the earphones 120, the audio with binaural beats may produce a good effect on the user, and a hearing aid function may also be reliably exerted for the user.

In this embodiment, the earphone 120 may include an earphone body 120A and an audio cable 120B. The audio cable 120B has a second connector 122 and a third connector 124. The earphone body 120A has a fourth connector 126. The third connector 124 is configured to connect to the fourth connector 126. In other words, a detachable design is adopted for the earphone body 120A and the audio cable 120B. Therefore, if the audio cable 120B is damaged, it is possible to replace only the audio cable 120B, and the original earphone body 120A may still be used, so the service life of the glasses 100 may be prolonged.

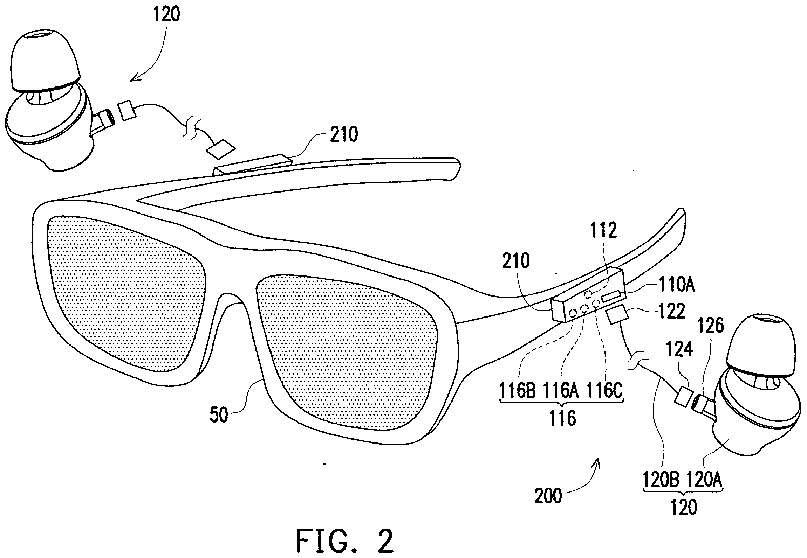

FIG. 2 is a schematic diagram of an audio device according to an embodiment of the present disclosure. Referring to FIG. 2, the audio device 200 of this embodiment is similar to the main technical solution of the pair of audio glasses 100 in FIG. 1. Here, the main differences between the two are explained. In addition, various additional technical solutions in the embodiment of FIG. 1 that will not cause conflict when being applied to this embodiment may also be applied to this embodiment. The audio device 200 in this embodiment includes a main body 210 and an earphone 120. The main body 210 is configured to be mounted on the glasses 50. In other words, the main body 210 of the audio device 200 may be mounted on any glasses. The user may adopt the main body 210 together with the original glasses 50 and the audio device 200, which allows for more flexibility in use.

The main body 210 has the first connector 110A and the audio processor 116 that is electrically connected to the first connector 110A. The audio processor 116 has at least one of a binaural beats generating circuit 116A and a hearing aid circuit 116B. The earphone 120 has a second connector 122. The first connector 110A is configured to connect to the second connector 122. In an embodiment, the first connector 110A and the second connector 122 may be connectors in the form of MMCX, the shape of which belongs to a type of coaxial connector, as long as the male connector is inserted into the female connector and then engaged. In addition, after the connection is completed, the MMCX connector will limit the movement of the male connector and the female connector in the axial direction, but retain the freedom of rotation of the male connector and the female connector rotating along the axial direction as the rotation axis, and they may rotate with 360° of freedom of rotation.

The main body 210 may further have a wireless transmission device 112. The wireless transmission device 112 enables the main body 210 to perform wireless data transmission with other devices, such as communication, transmission of audio and video data, etc., but the disclosure is not limited thereto. The wireless transmission device 112 may be a Bluetooth wireless transmission device.

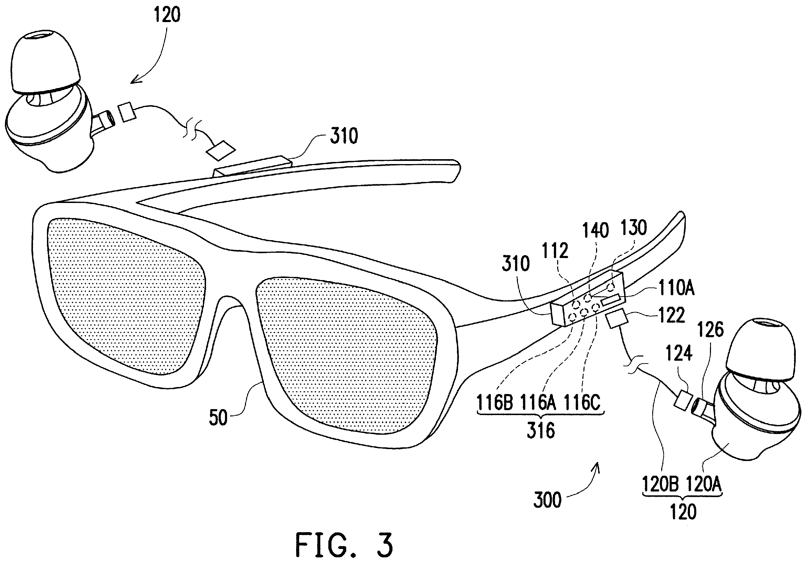

FIG. 3 is a schematic diagram of an audio device according to another embodiment of the present disclosure. Please refer to FIG. 3, the audio device 300 of this embodiment is similar to the main technical solution of the audio device 200 in FIG. 2. Here, the main differences between the two are explained. In addition, various additional technical solutions in the embodiment of FIG. 2 that will not cause conflict when being applied to this embodiment may also be applied to this embodiment. The audio device 300 of this embodiment includes a main body 310. The main body 310 is disposed on the glasses 50. In other words, the main body 310 of the audio device 200 may be disposed on any glasses. The user may adopt the main body 310 together with the original glasses 50 and the audio device 300, which allows for more flexibility in use.

The main body 310 has the first connector 110A and the audio processor 316 electrically connected to each other, and further has the wireless transmission device 112 electrically connected to the audio processor 316. Since the audio device 300 has the wireless transmission device 112, it is possible to acquire external audio signals in a wireless manner, and transmit the audio signals to the first connector 110A after the audio signals are processed by the audio processor 316. In this way, the user is able to listen to various audio sources through the earphone 120 connected to the first connector 110A as long as the user wears the glasses 50.

In this embodiment, the main body 310 may further have a speaker unit 130 electrically connected to the audio processor 316. Therefore, even if the earphone 120 is not used, various audio sources may be played directly through the speaker unit 130. The audio device 300 of this embodiment includes, for example, a switching unit 140. The audio processor 316 is switched to be electrically connected to the speaker unit 130 or the first connector 110A through the switching unit 140. That is, when the earphone 120 is not connected to the first connector 110A, the audio processor 316 is electrically connected to the speaker unit 130 so that the speaker unit 130 plays various audio sources. When the earphone 120 is connected to the first connector 110A, the switching unit 140 automatically switches the audio processor 316 to be electrically connected to the first connector 110A, so that the earphone 120 is able to play various audio sources.

In this embodiment, the audio processor 316 may have at least one of a binaural beats generating circuit 116A, a hearing aid circuit 116B, and a regional broadcast receiving circuit 116C as shown in FIG. 1. The earphone 120 of this embodiment may have a second connector 122. The first connector 110A is configured to connect to the second connector 122. In an embodiment, the first connector 110A and the second connector 122 may be connectors in the form of MMCX, and the shape of which belongs to a type of coaxial connector, as long as the male connector is inserted into the female connector and then engaged. In addition, after the connection is completed, the MMCX connector will limit the movement of the male connector and the female connector in the axial direction, but retain the freedom of rotation of the male connector and the female connector rotating along the axial direction as the rotation axis, and they may rotate with 360° of freedom of rotation. The wireless transmission device 112 may be a Bluetooth wireless transmission device.

To sum up, in the pair of audio glasses and the audio device provided by the present disclosure, the glasses body and the earphone adopt a detachable design, or the audio device and the glasses adopt a detachable design, so a better broadcasting effect may be provided where necessary. Furthermore, at least one of a binaural beats generating circuit, a hearing aid circuit, and a regional broadcast receiving circuit may further be provided, so ease of use is achieved.

## Claims

1. Audio glasses (100), comprising:
a glasses body (110), having a wireless transmission device (112), a first connector (110A), and an audio processor (116), wherein the audio processor (116) is electrically connected to the wireless transmission device (112) and the first connector (110A).

2. The audio glasses (100) according to claim 1, wherein the glasses body (110) further has a speaker unit (130) electrically connected to the audio processor (116).

3. The audio glasses (100) according to claim 2, further comprising a switching unit (140), wherein the audio processor (116) is switched to be electrically connected to the speaker unit (130) or the first connector (110A) through the switching unit (140).

4. The audio glasses (100) according to claim 3, wherein the switching unit (140) is combined in the first connector (110A).

5. The audio glasses (100) according to claim 2, wherein the speaker unit (130) is a diaphragm speaker or a bone conduction driver.

6. The audio glasses (100) according to claim 1, wherein the wireless transmission device (112) is a Bluetooth wireless transmission device.

7. The audio glasses (100) according to claim 1, further comprising an earphone (120), having a second connector (122), wherein the first connector (110A) is configured to connect to the second connector (122).

8. The audio glasses (100) according to claim 1, wherein the audio processor (116) has at least one of a binaural beats generating circuit (116A), a hearing aid circuit (116B), and a regional broadcast receiving circuit (116C).

9. An audio device (200), comprising:
a main body (210, 310), configured to be arranged on glasses (50), and having a wireless transmission device (112), a first connector (110A), and an audio processor (116), wherein the audio processor (116) is electrically connected to the wireless transmission device (112) and the first connector (110A).

10. The audio device (200) according to claim 9, wherein the main body (210, 310) further has a speaker unit (130) electrically connected to the audio processor (116).

11. The audio device (200) according to claim 10, further comprising a switching unit (140), wherein the audio processor (116) is switched to be electrically connected to the speaker unit (130) or the first connector (110A) through the switching unit (140).

12. The audio device (200) according to claim 11, wherein the switching unit (140) is combined in the first connector (110A).

13. The audio device (200) according to claim 10, wherein the speaker unit (130) is a diaphragm speaker or a bone conduction driver.

14. The audio device (200) according to claim 9, wherein the wireless transmission device (112) is a Bluetooth wireless transmission device.

15. The audio device (200) according to claim 9, further comprising an earphone (120), having a second connector (122), wherein the first connector (110A) is configured to connect to the second connector (122).

16. The audio device (200) according to claim 9, wherein the audio processor (116) has at least one of a binaural beats generating circuit (116A), a hearing aid circuit (116B), and a regional broadcast receiving circuit (116C).
